# EUROPEAN PATENT SPECIFICATION

(11) **EP 0 630 571 B1**
(45) Date of publication and mention of the grant of the patent: **18.08.1999**
(21) Application number: 94108855.1
(22) Date of filing: 09.06.1994
(51) Int. Cl.: A01N 65/00

(54) **A liquid composition having a moth-repelling effect**
Flüssige, mottenabstossende Zusammensetzung
Composition liquide ayant une effet répulsif pour les mites

(30) Priority: 24.06.1993 CH 189193
(43) Date of publication of application: 28.12.1994
(73) Proprietor: ORPHEA S.A., 6925 Gentilino (CH); DE LEURIKS B.V., NL-7604 BR Almelo (NL)
(72) Inventor: Bachmann, Sylvia, CH-6925 Gentilino (CH)
(74) Representative: La Ciura, Salvatore

(56) References cited:
- CH-A- 89 687
- DE-A- 3 842 232
- DE-A- 3 901 341
- CHEMICAL ABSTRACTS, vol. 84, no. 17, 26 April 1976, Columbus, Ohio, US; abstract no. 116871, KHARITONOVA, S. I. 'Prolonging effect of perfume fixatives and ethylcellulose in liquid repellent compositions' & MED. PARAZITOL. PARAZIT. BOLEZNI (1975), 44(6), 704-7 CODEN: MPPBAB, 1975
- CHEMICAL ABSTRACTS, vol. 111, no. 13, 25 September 1989, Columbus, Ohio, US; abstract no. 111032, SETO, SADAO 'Manufacture of pet collars containing pest repellents' & JP-A-63 307 801 (SETO, SADAO)

## Description

This invention relates to a liquid composition having a moth-repelling effect, wherein the composition is based on natural components having no harmful influence on human body and whose moth-repelling effect is more extended in time.

In particular, the composition according to the invention makes use of the following substances as its active components:
- essential oil of Clove-tree leaf from Madagascar,
- citronella oil from Java,
- Patchouly 35501,
- lavender extract from Marseille,
- lavender extract from Apt
- lavender extract from Vaucluse; as well as benzyl salicylate and fixolide, these latter acting as preservatives for the product to keep effectiveness of the product over a longer period of time.

The composition according to the invention falls within the class of products having a repelling effect on moths, that is products capable of giving off vapours over a certain period of time which are moth-repellent due to their being highly irritant to these insects.

These products can act, as the case may be, by evaporation or sublimation of the substances composing the moth-repelling preparation, which in turn, can be from either a natural or synthetic source. In the case of synthetic products, the vapours they give off are usually toxic to moths which generally die when in a space full of the vapours, for example, inside a wardrobe.

However, this toxicity also affects, though to a very lower extent, human beings who inhale said vapours, for example, when staying in a room where the wardrobe is placed.

Natural compositions with low or no toxicity are also known.

Examples of products of this type presently in use are citronella, lavender, or clove oil used either individually or in combination.

These compositions have, however, not found widespread acceptance hitherto in that these natural products have in general relatively poor and/or very short effectiveness, so that it is necessary to use the product in more concentrated form and/or to replace it frequently which is not cost effective.

In view of the above, a need has been felt in this connection for a product which has good moth-repelling property while maintaining its effectiveness over longer periods of time , and which is non-toxic to the human body.

These objectives are attained with the composition according to this invention which is the result of many thorough experiments by the applicant and whose features are as defined in the characterizing parts of the annexed claims.

The moth-repelling composition of the invention utilizes a clove-tree leaf essential oil coming from Madagascar in association with citronella oil from Java, Patchouly oil 35501, lavender extract from Marseille, lavender extract from Apt, and lavender extract from Vaucluse, as well as fixolide and benzyl salicylate as preservative agents and various other components to be described later.

By the use of the components referred to above the inventor has been able to work out a composition which is much more powerful in efficency than similar products of the prior art and whose effectiveness can last over a period of 1 to 3 months, depending on physical and thermal conditions in a room, a result which can be considered as satisfactory.

The moth-repelling compound of the invention has the composition as follows:
1) 4 to 6 parts per thousand (p.p.thousand, in the following) by weight, preferably 5 p.p.thousand by weight Synthetic Linalol (3,7-Dimethyl-1.6-ocatadien-3-ol),
2) 12 to 18 p.p.thousand by weight, preferably 15 p.p.thousand by weight Synthetic Linalyl acetate (Linalyl acetate),
3) 20 to 30 p.p.thousand by weight, preferably 25 p.p.thousand by weight Lavender oil absolute Ether (a lavender extract from Marseille - France).
4) 50 to 70 p.p.thousand by weight, preferbaly 60 p.p.thousand by weight Lavender oil HT E 2294 (a lavender oil from Apt - France),
5) 50 to 70 p.p.thousand by weight, preferably 60 p.p.thousand by weight Lavender Oil Maillette 7-59 (a lavender oil from Vaucluse - France),
6) 40 to 60 p.p.thousand by weight and preferably 50 p.p.thousand by weight Fixolide (7 - Acetyl - 1,1,3,4,4,6, - hesamethyl - tetralin),
7) 40 to 60 p.p.thousand by weight and preferably 50 p.p.thousand by weight Benzylsalicylate LG (Benzyl 2 - hydroxybenzoate benzyl salicylate),
8) 90 to 110 p.p.thousand by weight and preferably 100 p.p.thousand by weight Resinoid Benzoe Siam 50% (purified Benzoe-plant resin, an oil with a proper aroma coming from Thailand),
9) 90 to 110 p.p.thousand by weight and preferably 100 p.p.thousand by weight Cologne Water S. 1243 (a product available from Essencie AG, Winterthur (CH)),
10) 90 to 110 p.p.thousand by weight and preferably 100 p.p.thousand by weight Orphea E 226 (a product available from Essencie AG, Winterthur CH)),
11) 90 to 110 p.p.thousand by weight and preferably 100 p.p.thousand by weight Bouquet E 163 (a light yellow-to-brown-coloured essential oil based on Methylionon, Hydroxycitronellal), (a product sold by Essencie AG, Winterthur (CH)).
12) 250 to 300 p.p.thousand by weight and preferably 280 p.p.thousand by weight Patchouly 35501 Esrolko 9355010 (a red-to-brown-coloured essence coming from Indonesia based on Patchouly oil Indonesia, Nopylacetate, a product available from Givaudan SA, Genf (CH)).
13) 30 to 40 p.p.thousand by weight and preferably 35 p.p.thousand by weight Orphea 11445 Esrolko 9114450 (a sweet-smelling orange-coloured essential oil based on Hydroxycitronellal, Citronella oil, a product available from Givaudan SA, Genf (CH)),
14) 5 to 15 p.p.thousand by weight and preferably 10 p.p.thousand by weight Citronella oil Java, 85/35% ph. H.VI. Mel. Ind. (citronella oil from Java) - an insect repellent,
15) 5 to 15 p.p.thousand by weight and preferably 10 p.p.thousand by weight clove-tree leaf oil 80/85% hell (a clove-tree leaf essential oil from Madagascar).

Products 1) and 2) are substances having a proper aroma which is repellent for insects.

Compound 15), a clove-tree leaf essential oil from Madagascar, has shown to be determinant in keeping off moths from woollen clothes, while products 6) and 7), Fixolide and Salol, act to preserve the product so as to cause it to maintain its effectiveness for a longer time.

The olfactory perception produced by the moth-repelling vapours is pleasant due to these vapours being sweet-smelling.

According to a preferred embodiment of the invention, use is made of an absorbent paper as the mechanical support for the composition which is produced in liquid state, the absorbent paper being impregnated with the composition. However, many other types of supports may also be utilized as long as the support is of adeguate porosity and is workable in character so that support shapes most adapted for individual specific applications can be obtained.

The single substances used have been referred to above with the names under which these substances are designated by their manufacturers and known by those skilled in the art.

The thus obtained product has undergone many tests showing the product to have considerable effectiveness and be capable of exerting its activity over a sufficiently extended period of time ranging fro 1 to 3 months.

This formulation may be completed, if necessary, by adding other compounds such as Pyrethrum, etc., to it.

## Claims

1. A liquid composition capable of giving off moth-repelling vapours, characterized in that the following copounds are utilized in said composition:
- Lavender oil absolute Ether (a lavender extract from Marseille - France),
- Lavender oil HT E 2294 (a lavender oil from Apt - France),
- Lavender oil Maillette 7-59 (a lavender oil from Vaucluse, France),
- Fixolide (7 - Acetyl - 1,1,3,4,4,6, - hexamethyl - tetraline),
- Benzylsalicylate LG (Benzyl 2 - hydroxybenzoate, benzyl salicylate),
- Patchouly 35501 Esrolko 9355010, a red-to-brown-coloured essential oil from Indonesia (based on Patchouly oil Indonesia, Nopylacetate, a product available from Givaudan SA, Genf (CH)),
- Citronellaoil Java, 85/35% ph. H. VI. Mel. Ind. (citronella oil coming from Java), an insect repellent,
- clove-tree leaf oil 80/85 % (a clove-tree leaf essential oil from Madagascar).

2. The moth-repellent composition according to claim 1, characterized in that the composition comprises:
- 4 to 6 parts per thousand by weight Synthetic Linalol synth (3,7-Dimethyl-1.6-octadien-3-ol),
- 12 to 18 p.p.thousand by weight Synthetic Linalylacetate (Linalol acetate),
- 20 to 30 p.p.thousand by weight Lavender oil absolute Ether,
- 50 to 70 p.p.thousand by weight Lavender oil HT E 2294 (a lavender essential oil from Apt - France),
- 50 to 70 p.p.thousand by weight Lavender oil Maillette 7-59 (a lavender essential oil from Vaucluse - France),
- 40 to 60 p.p.thousand by weight Fixolide (7 - Acetyl - 1,1,3,4,4,6, - hexamethyl - tetralin),
- 40 to 60 p.p.thousand by weight Benzylsalicylate LG (Benzyl salicylate),
- 90 to 110 p.p.thousand by weight Resinoid Benzoe Siam 50% (purified Benzoe-plant resin, an essential oil with a proper aroma, coming from Thailand),
- 90 to 110 p.p.thousand by weight of Cologne Water S. 1243 (a product available from Essencie AG, Winterthur (CH)),
- 90 to 110 p.p.thousand by weight Orphea E 226 (a product available from Essencie AG, Winterthur (CH)),
- 90 to 110 p.p.thousand by weight Bouquet E 163 (light yellow-to-brown-coloured essential oil based on Methylionon, Hydroxycitronellal, a product available from Essencie AG, Winterthur (CH)),
- 250 to 300 p.p.thousand by weight of Patchouly 5501 Esrolko 9355010 (red-to-brown-coloured essential oil from Indonesia based on Patchouly oil Indonesia, Nopylacetat, a product available from Givaudan SA, Genf (CH)),
- 30 to 40 p.p.thousand by weight Orphea 11445 Esrolko 9114450 (an orange-coloured, sweet-smelling essential oil based on Hydroxycitronellal, Citronella oil; a product available from Givaudan SA, Genf (CH)),
- 5 to 15 p.p.thousand by weight Citronella oil Java, 85/35% ph. H.VI. Mel. Ind. (Citronella oil, coming from Java), an insect-repellent,
- 5 to 15 p.p.thousand by weight clove-tree leaf oil 80/85% (a clove-tree leaf essential oil from Madagascar).

3. The moth-repelling composition according to claim 2, wherein the above-said components are present by the following amounts by weight in the composition:
| | |
|---|---|
| - Synthetic Linalol (3,7-Dimethyl-1,6-octadien-3-ol), | 5 p.p.thousand |
| - Synthetic Linalyl acetate (Linalol acetate) | 5 p.p.thousand |
| - Lavender oil absolute Ether | 25 p.p.thousand |
| - Lavender oil HT E 2294 | 60 p.p.thousand |
| - Lavender oil Maillette 7-59 | 60 p.p.thousand |
| - Fixolide | 50 p.p.thousand |
| - Benzylsalicylate LG | 50 p.p.thousand |
| - Resinoid Benzoe Siam 50% | 100 p.p.thousand |
| - Cologne Water S. 1243 | 100 p.p.thousand |
| - Orphea E 226 | 100 p.p.thousand |
| - Bouquet E 163 | 100 p.p.thousand |
| - Patchouly 35501 Esrolko 9355010 | 280 p.p.thousand |
| - Orphea 11445 Esrolko 9114450 | 35 p.p.thousand |
| - Citronella oil Java, 85/35% ph. H.VI. Mel. Ind. | 10 p.p.thousand |
| - Clove-tree leaf oil 80/85% hell | 10 p.p.thousand |

4. Moth-repelling strips obtained from a porous support having been impregnated with a composition according to claims 1 to 3.

5. The moth-repelling strips according to claim 4, wherein said porous support is absorbent paper.

## Patentansprüche

1. Eine flüssige Zusammensetzung, die in der Lage ist, ein Mottenvernichtender Dampf auszuströmen, dadurch gekennzeichnet, dass die folgenden Bestandteile in der obengenannten Zusammensetzung benützt werden:
- Lavendelöl absolutes Aether (ein Lavendel-Extract aus Marseille, Frankreich),
- Lavendelöl HT E 2294 (ein Lavendelöl aus Apt, Frankreich),
- Lavendelöl Maillette 7-59 (ein Lavendelöl aus Vaucluse, Frankreich),
- Fixolide (7 - Azetyl - 1,1,3,4,4,6 Hexamethyl - Tetralin),
- Benzylsalizylat LG (Benzyl 2 Benzoatehydroxyd, Benzylsalizylat),
- Patchouly 35501 Esrolko 9355010 (ein ätherisches rot-braunes Öl aus Indonesien, (ein aus Patchoulyöl Indonesien, Nopylacetat zusammengesetztes Öl, ein Produkt, das bei Givaudan SA Genf CH, zur Verfügung steht),
- Zitronellaöl Java 85/35% ph. H. VI. Mel. Ind. (Zitronellaöl aus Java), ein Insektvertreibender,
- Nelkenblätteröl 80/85% (ein ätherisches Öl aus Nelkenblätter von Madagascar),

2. Mottenvernichtende Zusammensetzung, nach Anspruch 1, dadurch gekennzeichnet dass die Zusammensetzung enthält:
- von 4 bis 6 Gewichtsteile pro Tausand, von synthetischem Linalool (3,7 Dimethyl-1,6-Octadien-3-ol),
- von 12 bis 18 Gewichtsteile pro Tausand, von synthetischem Linalylazetat (Linaloolazetat),
- von 20 bis 30 Gewichtsteile pro Tausand von Lavendelöl absolutes Aether,
- von 50 bis 70 Gewichtsteile pro Tausand von Lavendelöl HT E 2294 (ein ätherisches Lavendelöl aus Apt, Frankreich),
- von 50 bis 70 Gewichtsteile pro Tausand von Lavendelöl Maillette 7-59 (ein ätherisches Lavendelöl aus Vaucluse, Frankreich),
- von 40 bis 60 Gewichtsteile pro Tausand von Fixolide (7-Azetyl-1,1,3,4,4,6 Hexamethyl-Tetralin),
- von 40 bis 60 Gewichtsteile pro Tausand von Benzylsalizylat LG (Benzylsalizylat),
- von 90 bis 110 Gewichtsteile pro Tausand von Resinoid Benzoe Siam 50% (einem gereinigten Harz aus Benzoe Pflanze, ein ätherisches Öl mit einem eigen Aroma, aus Thailand),
- von 90 bis 110 Gewichtsteile pro Tausand von Kölnisch Wasser S. 1243 (ein Produkt, das bei Essencie AG, Winterthur CH, zur Verfügung steht),
- von 90 bis 110 Gewichtsteile pro Tausand von Orphea E 226 (ein Produkt, das bei Essencie AG, Winterthur CH, zur Verfügung steht),
- von 90 bis 110 Gewichtsteile pro Tausand von Bouquet E 163 (ein ätherisches hellgelb-braunes, aus Methylionon, Zitronellahydroxyd zusammengesetztes Öl, ein Produkt, das bei Essencie AG, Winterthur, CH, zur Verfügung steht),
- von 250 bis 300 Gewichtsteile pro Tausand von Patchouly 5501 Esrolko 9355010 (ein ätherisch, rot-braunes, aus Indonesia, Nopylacetat zusammengesetztes Patchoulyöl Indonesien, ein Produkt das bei Givaudan SA, Genf CH, zur Verfügung steht),
- von 30 bis 40 Gewichtsteile pro Tausand von Orphea 11445 Esrolko 9114450 (ein ätherisches orangenfarbiges, duftendes aus Zitronellahydroxid, Zitronellaöl, zusammengesetztes Öl, ein Produkt das bei Givaudan SA, Genf (CH) zur Verfügung steht),
- von 5 bis 15 Gewichtsteile pro Tausand von Zitronellaöl Java 85/35% ph. H. VI. Mel. Ind. (Zitronellaöl aus Java), ein Insektvertreibender.
- von 5 bis 15 Gewichtsteile pro Tausand von Nelkenblätteröl 80/85% (ein ätherisches Nelkenblätteröl aus Madagascar).

3. Mottenvernichtende Zusammensetzung, nach Anspruch 2, wobei die obengenannten Komponenten in folgende Gewichtsquantitäten in der Zusammensetzung anwesend sind:
| | |
|---|---|
| [Gewichtsteile pro Tausand = G.p.T.] | |
| - Synthetisches Linalool (3,7 Dymethyl-1,6 Octadien-3-Ol | 5 G.p.T. |
| - Synthetisches Lynalazetat | 5 G.p.T. |
| - Lavendelöl absolutes Aether | 25 G.p.T. |
| - Lavendelöl HT E 2294 | 60 G.p.T. |
| - Lavendelöl Maillette 7-59 | 60 G.p.T. |
| - Fixolide | 50 G.p.T. |
| - Benzylsalizylat LG | 50 G.p.T. |
| - Resinoid Benzoe SIAM 50% | 100 G.p.T. |
| - Kölnisch Wasser S. 1243 | 100 G.p.T. |
| - Orphea E 226 | 100 G.p.T. |
| - Bouquet E 163 | 100 G.p.T. |
| - Patchouly 35501 Esrolko 9355010 | 280 G.p.T. |
| - Orphea 11445 Esrolko 9114450 | 35 G.p.T. |
| - Zytronellaöl Java 85/35% ph.H.VI.Mel.Ind. | 10 G.p.T. |
| - Nelkenblaetteröl 80/85% | 10 G.p.T. |

4. Mottenvernichtende, aus einer porösen Stützen erhaltene Streifen, die mit einer Zusammensetzung nach Ansprüche von 1 bis 3 imprägniert sind.

5. Mottenvernichtende Streifen, nach Anspruch 4, wobei die obengenannten porösen Stützen aus Lösch-Papier ist.

## Revendications

1. Une composition liquide capable d'exhaler des vapeurs antimites, caractérisée en ce que les suivants composés sont utilisés dans ladite composition:
- Ether absolu d'huile de lavande (un extrait d'huile de lavande de Marseille, France),
- Huile de lavande HT E 2294 (une huile de lavande de Apt, France),
- Huile de lavande Maillette 7-59 (une huile de lavande de Vaucluse, France),
- Fixolide (7 - acétyle - 1,1,3,4,4,6 - hexaméthyle - tétraline),
- Benzylsalicylate LG (benzyle 2 - hydroxybenzoate, benzylsalicylate),
- Patchouly 35501 Esrolko 9355010, une huile essentielle de couleur rouge-marron de l'Indonésie, (composé d'huile de Patchouly Indonesia, Nopylacetat, un produit disponible chez la Givaudan SA Genève CH),
- Huile de citronnelle Java 85/35% ph. H. VI. Mel. Ind. (huile de citronnelle de Java), un insectifuge,
- Huile de feuilles d'oeillet 80/85% (une huile essentielle de feuilles d'oeillet du Madagascar),

2. Composition antimites selon la revendication 1, cacacterisée en ce que la composition comprend:
- de 4 à 6 parts pour mille en poids de linalool synthétique (3,7 diméthyle-1,6-octadiene-3-ol),
- de 12 à 18 parts pour mille en poids de linalylacetate synthétique (Linaloolacetate),
- de 20 à 30 parts pour mille en poids d'éther absolu d'huile de lavande,
- de 50 à 70 parts pour mille en poids d'huile de lavande HT E 2294 (une huile de lavande synthétique de Apt, France),
- de 50 à 70 parts pour mille en poids d'huile de lavande Maillette 7-59 (une huile de lavande synthétique de Vaucluse, France),
- de 40 à 60 parts pour mille en poids de Fixolide (7-acétyle - 1,1,3,4,4,6 hexaméthyle - tétraline),
- de 40 à 60 parts pour mille en poids de benzylsalicylate LG (benzylsalicylate),
- de 90 à 110 parts pour mille en poids de Resinoid Benzoe Siam 50% (résine purifée de la plante de Benjoin, une huile essentielle avec un arôme particulier venant de la Thailande),
- de 90 à 110 parts pour mille en poids d'eau de Cologne S. 1243 (un produit disponible chez la Essencie AG, Winterthur CH),
- de 90 à 110 parts pour mille en poids d'Orphea E 226 (un produit disponible chez la Essencie AG, Winterthur CH),
- de 90 à 110 parts pour mille en poids de Bouquet E 163 (une huile essentielle de couleur jaune clair-marron composé de Methylionon, hydroxycitronnelle, un produit disponible chez la Essencie AG, Winterthur, CH),
- de 250 à 300 parts pour mille en poids de Patchouly 5501 Esrolko 9355010 (une huile essentielle de couleur rouge-marron composée d'huile de Patchouly Indonesia, Nopylacetat, un produit disponible chez la Givaudan SA, Genève CH),
- de 30 à 40 parts pour mille en poids d'Orphea 11445 Esrolko 9114450 (une huile essentielle de couleur orange, parfumée, composée d'hydroxycitronnelle, huile de citronnelle, un produit disponible chez la Givaudan SA, Genève CH),
- de 5 à 15 parts pour mille en poids d'huile de citronnelle Java 85/35% ph. H. VI. Mel. Ind. (huile de citronnelle venant de Java), un insectifuge,
- de 5 à 15 parts pour mille en poids d'huile de feuilles d'oeillet 80/85% (une huile synthétique de feuilles d'oeillet du Madagascar).

3. Composition antimites, selon la revendication 2, caractérisée en ce que les composés susmentionnées sont présents dans les suivantes quantités en poids dans la composition:
| | |
|---|---|
| [Parts par mille en poids = p.m.p.] | |
| - Linalool synthétique (3,7 dyméthyle-1,6 octadiene-3-Ol | 5 p.m.p. |
| - Lynalacetate synthétique | 5 p.m.p. |
| - Ether absolu d'huile de lavande | 25 p.m.p. |
| - Huile de lavande HT E 2294 | 60 p.m.p. |
| - Huile de lavande Maillette 7-59 | 60 p.m.p. |
| - Fixolide | 50 p.m.p. |
| - Benzylsalicylate LG | 50 p.m.p. |
| - Resinoid Benzoe Siam 50% | 100 p.m.p. |
| - Eau de Cologne S. 1243 | 100 p.m.p. |
| - Orphea E 226 | 100 p.m.p. |
| - Bouquet E 163 | 100 p.m.p. |
| - Patchouly 35501 Esrolko 9355010 | 280 p.m.p. |
| - Orphea 11445 Esrolko 9114450 | 35 p.m.p. |
| - Huile de citronnelle Java 85/35% ph.H.VI.Mel.Ind. | 10 p.m.p. |
| - Huile de feuilles d'oeillet 80/85% | 10 p.m.p. |

4. Bandes antimites obtenues d'un support poreux qui ont été imprégnées d'une composition selon les revendications de 1 à 3.

5. Bandes antimites, selon la revendication 4, caractérisées en ce que le support poreux susmentionné est du papier buvard.
